(19) Europäisches Patentamt / European Patent Office / Office européen des brevets

(11) **EP 4 400 356 A1**

(12) **EUROPEAN PATENT APPLICATION**
published in accordance with Art. 153(4) EPC

(43) Date of publication:
**17.07.2024 Bulletin 2024/29**

(21) Application number: **22867191.3**

(22) Date of filing: **23.08.2022**

(51) International Patent Classification (IPC):
**B60L 15/20** (2006.01)    **B60W 30/188** (2012.01)
**B62D 11/04** (2006.01)

(52) Cooperative Patent Classification (CPC):
**B62D 11/04; B60L 15/20; B60L 15/2009;**
**B62D 11/003;** B60L 2220/42; B60L 2220/44;
B60L 2220/46; B60L 2240/12; B60L 2240/22;
B60L 2240/421; B60L 2240/423; B60L 2240/461;
B60L 2240/465; B60L 2260/42; Y02T 10/72

(86) International application number:
**PCT/JP2022/031736**

(87) International publication number:
**WO 2023/037869 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021  JP 2021147626**

(71) Applicant: **DENSO CORPORATION**
**Kariya-city, Aichi 448-8661 (JP)**

(72) Inventors:
• **KAMIO, Shigeru**
**Kariya-city, Aichi 448-8661 (JP)**

• **LIU, Haibo**
**Kariya-city, Aichi 448-8661 (JP)**
• **KAWAI, Keisuke**
**Kariya-city, Aichi 448-8661 (JP)**
• **TAKAGI, Tatsuya**
**Kariya-city, Aichi 448-8661 (JP)**
• **AKAMA, Sadahiro**
**Kariya-city, Aichi 448-8661 (JP)**
• **HORIHATA, Harumi**
**Kariya-city, Aichi 448-8661 (JP)**
• **KUBOTA, Masaru**
**Kariya-city, Aichi 448-8661 (JP)**
• **KUROYANAGI, Youichi**
**Kariya-city, Aichi 448-8661 (JP)**

(74) Representative: **TBK**
**Bavariaring 4-6**
**80336 München (DE)**

(54) **MOVING BODY AND PROGRAM**

(57)    A mobile object includes: a first braking/driving torque application unit (30R) that applies first braking/driving torque to a right driving wheel (22R); a second braking/driving torque application unit (30L) that applies second braking/driving torque to a left driving wheel (22L); a right driven wheel (21R) and a left driven wheel (21L) each of which is constituted of a caster wheel; and a control unit (40) that controls the first braking/driving torque application unit and the second braking/driving torque application unit. Moreover, the control unit is configured to perform turning, advancing/reversing and braking of the mobile object by controlling the first braking/driving torque and the second braking/driving torque or by controlling rotational speed of the right driving wheel and rotational speed of the left driving wheel.

# FIG.1

**Description**

[CROSS-REFERENCE TO RELATED APPLICATION]

The present application is based on and claims the benefit of priority from Japanese Patent Application No. 2021-147626 filed on September 10, 2021, the entire contents of which are incorporated herein by reference.

[TECHNICAL FIELD]

The present disclosure relates to mobile objects and programs.

[BACKGROUND ART]

There is known a vehicle as described in Patent Document 1. The vehicle includes a motor, disk brakes and a steering device. The motor applies torque to wheels of the vehicle according to the amount of depression of an accelerator pedal by a driver, thereby causing the vehicle to travel. The disk brakes apply braking torque to the wheels according to the amount of depression of a brake pedal by the driver, thereby causing the vehicle to be stopped. The steering device steers the wheels according to the manipulation of a steering wheel by the driver, thereby causing the vehicle to be turned.

[PRIOR ART LITERATURE]

[PATENT LITERATURE]

[Patent Document 1] Japanese Unexamined Patent Application Publication No. JP 2006-341656 A

[SUMMARY OF THE INVENTION]

In a conventional vehicle such as the one described in Patent Document 1, it is necessary to employ a power generation device (such as a motor), a braking device (such as a brake) and a steering device to realize basic operations (such as traveling, braking and turning) of the vehicle. This causes the structure of the vehicle to become complicated and the robustness of the vehicle to be lowered.

An object of the present disclosure is to provide a mobile object and a program which can simplify the structure and improve the robustness.

According to one aspect of the present disclosure, there is provided a mobile object which includes: a first braking/driving torque application unit that applies first braking/driving torque to a right driving wheel; a second braking/driving torque application unit that applies second braking/driving torque to a left driving wheel; a right driven wheel and a left driven wheel each of which is constituted of a caster wheel; and a control unit that controls the first braking/driving torque application unit and the second braking/driving torque application unit.

Moreover, the control unit is configured to perform turning, advancing/reversing and braking of the mobile object by controlling the first braking/driving torque and the second braking/driving torque or by controlling rotational speed of the right driving wheel and rotational speed of the left driving wheel.

According to another aspect of the present disclosure, there is provided a program for controlling a first braking/driving torque application unit and a second braking/driving torque application unit in a mobile object. The mobile object includes: the first braking/driving torque application unit that applies first braking/driving torque to a right driving wheel; the second braking/driving torque application unit that applies second braking/driving torque to a left driving wheel; and a right driven wheel and a left driven wheel each of which is constituted of a caster wheel. The program is configured to cause a computer to execute processes of performing turning, advancing/reversing and braking of the mobile object by controlling the first braking/driving torque and the second braking/driving torque or by controlling rotational speed of the right driving wheel and rotational speed of the left driving wheel.

With the above configuration, neither an electric power steering device nor a braking device is required. Consequently, it becomes possible to simplify the structure of the mobile object and improve the robustness of the mobile object.

[BRIEF DESCRIPTION OF THE DRAWINGS]

FIG. 1 is a schematic diagram illustrating the overall configuration of a vehicle according to an embodiment.
FIG. 2 is a schematic side view illustrating the structure of a driven wheel of the vehicle according to the embodiment.
FIG. 3 is a block diagram illustrating the electrical configuration of the vehicle according to the embodiment.
FIG. 4 is a schematic diagram illustrating the configuration of a shift operation unit of the vehicle according to the embodiment.
FIG. 5 is a schematic diagram illustrating the configuration of a driving operation unit of the vehicle according to the embodiment.
FIG. 6 is a block diagram illustrating the configuration of an EVECU of the vehicle according to the embodiment.
FIG. 7 is a flowchart illustrating steps of a process performed by a braking/driving torque calculation unit.
FIG. 8 is a diagram illustrating an example of a driving torque calculation map.
FIG. 9 is a diagram illustrating an example of a braking torque calculation map.

FIG. 10 is a flowchart illustrating steps of a process performed by a speed upper limit calculation unit.

FIG. 11 is a diagram illustrating an example of an upper limit vehicle speed calculation map.

FIG. 12 is a flowchart illustrating steps of a process performed by a speed difference calculation unit.

FIG. 13 is a diagram illustrating an example of a during-traveling speed difference calculation map.

FIG. 14 is a diagram illustrating an example of a target yaw rate calculation map.

FIG. 15 is a diagram illustrating an example of a during-stopping speed difference calculation map.

FIG. 16 is a diagram illustrating an example of a target steering angle calculation map.

FIGS. 17(A) to (F) are timing charts respectively illustrating the changes with time of the forward/backward operation amount of the driving operation unit, the leftward/rightward operation amount of the driving operation unit, the output torques of in-wheel motors, the target rotational speed difference, the vehicle speed, and the yaw rate in the vehicle according to the embodiment.

FIGS. 18(A) to (F) are timing charts respectively illustrating the changes with time of the forward/backward operation amount of the driving operation unit, the leftward/rightward operation amount of the driving operation unit, the output torques of the in-wheel motors, the target rotational speed difference, the vehicle speed and the driving-wheel speeds, and the yaw rate in the vehicle according to the embodiment.

FIGS. 19(A) to (F) are timing charts respectively illustrating the changes with time of the forward/backward operation amount of the driving operation unit, the leftward/rightward operation amount of the driving operation unit, the output torques of the in-wheel motors, the target rotational speed difference, the vehicle speed and the driving-wheel speeds, and the driven-wheel steering angles in the vehicle according to the embodiment.

[EMBODIMENTS FOR CARRYING OUT THE INVENTION]

Hereinafter, an embodiment of a vehicle will be described with reference to the drawings. It should be noted that: for facilitating understanding of the description, identical components are designated, where possible, by the same reference numerals in the drawings; and duplicated description thereof will be omitted.

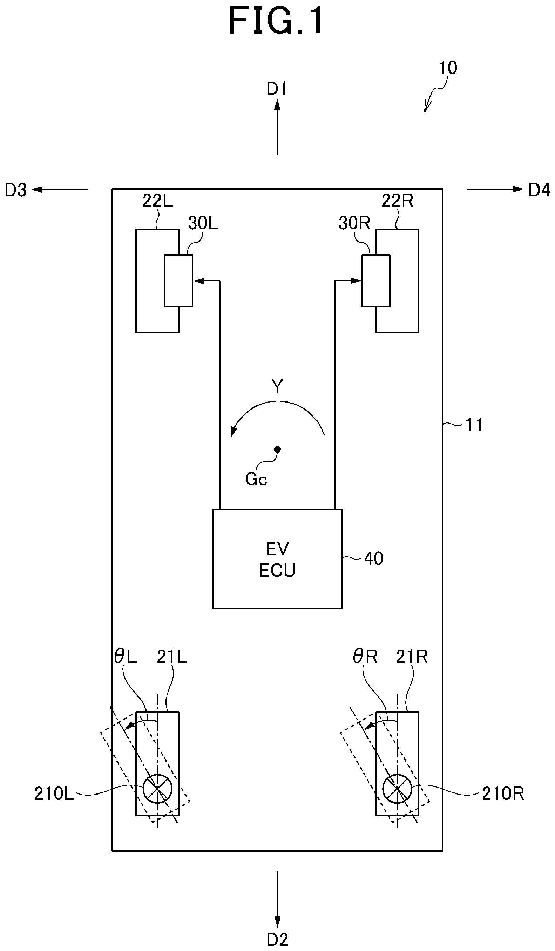

First, the overall configuration of a vehicle 10 according to the present embodiment will be described. As shown in FIG. 1, the vehicle 10 includes driven wheels 21R and 21L, driving wheels 22R and 22L, in-wheel motors 30R and 30L, and an Electric Vehicle (EV) Electronic Control Unit (ECU) 40. The vehicle 10 is, for example, a so-called slow mobility vehicle which travels at a speed less than a predetermined speed. The predetermined speed may be set to 20[km/h], 50[km/h] or the like. The vehicle 10 is not equipped with a dedicated braking device and a dedicated steering device; and braking and turning of the vehicle 10 are realized by torque control of the in-wheel motors 30R and 30L. In addition, in the present embodiment, the vehicle 10 corresponds to a mobile object.

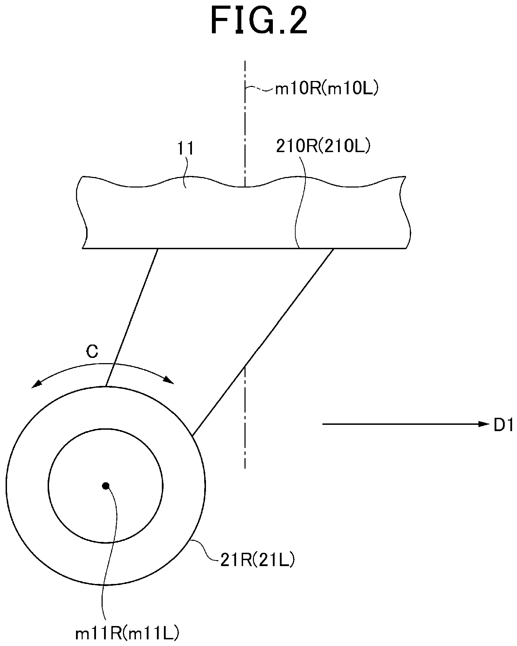

The driven wheels 21R and 21L are provided respectively in a right rear part and a left rear part of the vehicle 10. The driven wheels 21R and 21L are turnable wheels, i.e., so-called caster wheels. Specifically, the driven wheels 21R and 21L have respective pivots 210R and 210L fixed to the vehicle body 11. Moreover, the driven wheels 21R and 21L are supported by the vehicle body 11 so as to be turnable by 360 degrees respectively around axes m10R and m10L of the pivots 210R and 210L; the axes m10R and m10L extend in the vertical direction in the vehicle 10 as shown in FIG. 2. Furthermore, with traveling of the vehicle 10, the driven wheels 21R and 21L rotate in a circumferential direction C about respective axes m11R and m11L. Hereinafter, the driven wheel 21R will also be referred to as the "right driven wheel 21R"; and the driven wheel 21L will also be referred to as the "left driven wheel 21L".

As shown in FIG. 1, the driving wheels 22R and 22L are provided respectively in a right front part and a left front part of the vehicle 10. Driving torque and braking torque are applied by the in-wheel motors 30R and 30L respectively to the driving wheels 22R and 22L. Hereinafter, the driving wheel 22R will also be referred to as the "right driving wheel 22R"; and the driving wheel 22L will also be referred to as the "left driving wheel 22L". Moreover, driving torque and braking torque will also be collectively referred to as "braking/driving torque". In the present embodiment, the in-wheel motor 30R corresponds to a first braking/driving torque application unit; and the braking/driving torque applied by the in-wheel motor 30R to the right driving wheel 22R corresponds to first braking/driving torque. On the other hand, the in-wheel motor 30L corresponds to a second braking/driving torque application unit; and the braking/driving torque applied by the in-wheel motor 30L to the left driving wheel 22L corresponds to second braking/driving torque.

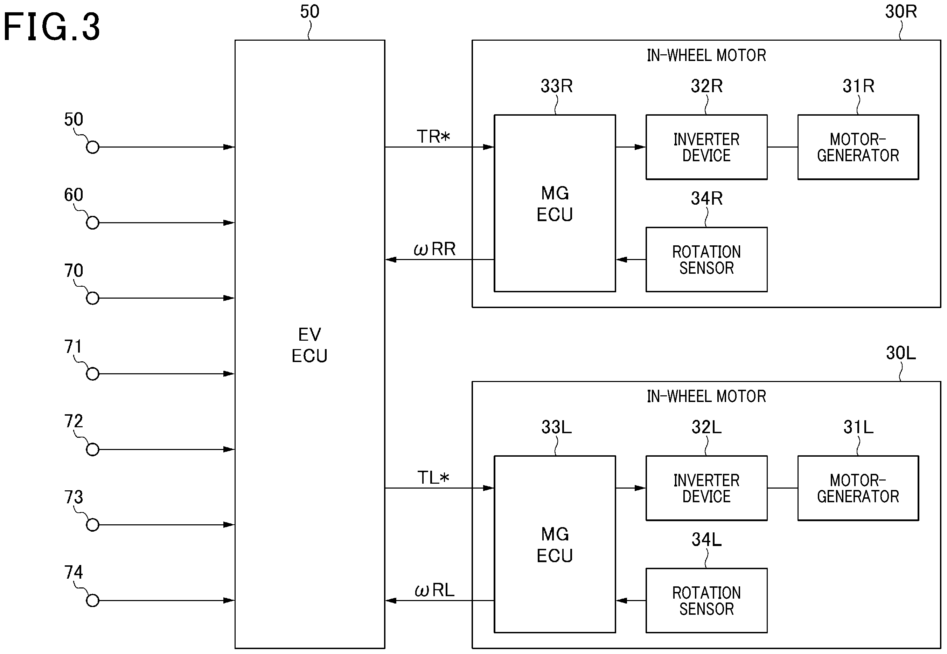

The in-wheel motors 30R and 30L are built respectively in the driving wheels 22R and 22L. As shown in FIG. 3, the in-wheel motors 30R and 30L respectively have motor-generators 31R and 31L, inverter devices 32R and 32L, Motor-Generator (MG) ECUs 33R and 33L, and rotation sensors 34R and 34L.

The inverter device 32R converts DC power supplied from a battery installed in the vehicle 10 into three-phase AC power and supplies the resultant three-phase AC power to the motor-generator 31R.

The motor-generator 31R operates as an electric motor when driving the vehicle 10. Moreover, when operating as an electric motor, the motor-generator 31R is driven by the three-phase AC power supplied from the inverter device 32R. In response to transmission of the driving torque of the motor-generator 31R to the right driving wheel 22R, the right driving wheel 22R rotates and the vehicle 10 travels in a forward direction D1 or in a backward direction D2 as shown in FIG. 1.

The motor-generator 31R shown in FIG. 3 operates as an electric motor when braking the vehicle 10. Moreover, when operating as an electric motor, the motor-generator 31R generates electric power through regenerative operation. The regenerative operation of the motor-generator 31R causes braking torque to be applied to the right driving wheel 22R. Three-phase AC power generated by the motor-generator 31R is converted into DC power by the inverter device 32R; then the DC power is charged to the battery of the vehicle 10.

The rotation sensor 34R detects the rotational speed of an output axis of the motor-generator 31R and outputs a signal indicating the detected rotational speed to the MGECU 33R.

The MGECU 33R is constituted mainly of a microcomputer which includes a CPU, a memory and the like. The MGECU 33R controls the drive of the motor-generator 31R by executing a program stored in advance in its memory.

Specifically, the MGECU 33R acquires information on the rotational speed of the motor-generator 31R from the output signal of the rotation sensor 34R. Then, the MGECU 33R calculates, based on the rotational speed of the motor-generator 31R, the rotational speed $\omega$RR of the right driving wheel 22R using an arithmetic expression, a map or the like. Hereinafter, the rotational speed of the right driving wheel 22R will also be referred to as the "right driving wheel speed $\omega$RR".

The MGECU 33R is communicably connected with the EVECU 40 via an on-vehicle network such as a CAN installed in the vehicle 10. The EVECU 40 sets first target braking/driving torque TR* that is a target value of the braking/driving torque of the right driving wheel 22, and transmits the set first target braking/driving torque TR* to the MGECU 33R. The MGECU 33R controls, while monitoring the rotational speed of the motor-generator 31R, the output torque of the motor-generator 31R so that the torque actually outputted from the motor-generator 31R becomes equal to the first target braking/driving torque TR*. In addition, the first target braking/driving torque TR* is set to a positive value when acerating the vehicle 10 in the forward direction D1, i.e., when causing the motor-generator 31R to operate as an electric motor. In contrast, the first target braking/driving torque TR* is set to a negative value when decelerating the vehicle 10, i.e., when causing the motor generator 31R to perform the regenerative operation.

In addition, in response to a request from the EVECU 40, the MGECU 33R transmits to the EVECU 40 various information that can be acquired by the MGECU 33R, such as the right driving wheel speed $\omega$RR.

The motor-generator 31L, the inverter device 32L, the MGECU 33L and the rotation sensor 34L of the in-wheel motor 30L operate similarly to the components of the in-wheel motor 30R. For example, the MGECU 33L controls, while monitoring the rotational speed of the motor-generator 31L, the output torque of the motor-generator 31L so that the torque actually outputted from the motor-generator 31L becomes equal to second target braking/driving torque TL*. The second target braking/driving torque TL* is a target value of the braking/driving torque of the left driving wheel 22L which is set by the EVECU 40. Moreover, in response to a request from the EVECU 40, the MGECU 33L transmits to the EVECU 40 various information that can be acquired by the MGECU 33L, such as the rotational speed $\omega$RL of the left driving wheel 22L. Hereinafter, the rotational speed of the left driving wheel 22L will also be referred to as the "left driving wheel speed $\omega$RL".

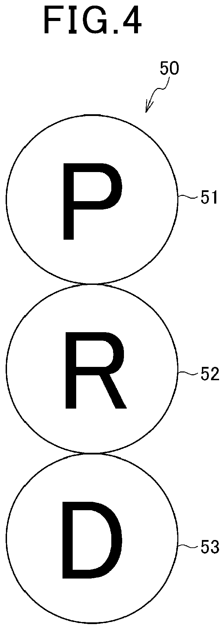

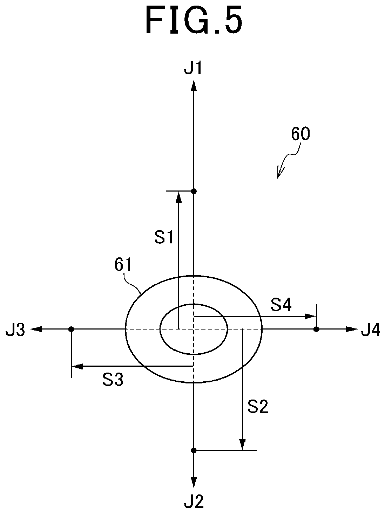

The vehicle 10 further includes, as operation units for operating the vehicle 10, a shift operation unit 50 shown in FIG. 4 and a driving operation unit 60 shown in FIG. 5.

As shown in FIG. 4, the shift operation unit 50 includes, as switches that can be depressed and thereby operated by the driver, a P (parking) switch 51, an R (reverse) switch 52 and a D (drive) switch 53. The P switch 51 is a switch which is operated when setting the shift range of the vehicle 10 to a P range, i.e., when stopping the vehicle 10. The R switch 52 is a switch which is operated when setting the shift range of the vehicle 10 to an R range, i.e., when causing the vehicle 10 to travel in the backward direction D2. The D switch 53 is a switch which is operated when setting the shift range of the vehicle 10 to a D range, i.e., when causing the vehicle 10 to travel normally. The driver can switch the shift range of the vehicle 10 by depressing any one of the three switches 51 to 53 for a predetermined time. For example, in response to the driver depressing the D switch 53 for the predetermined time when the current shift range of the vehicle 10 is the P range, the shift range of the vehicle 10 is switched to the D range. The shift operation unit 50 outputs a signal indicating the depressed state of the one of the switches 51 to 53 to the EVECU 40.

The driving operation unit 60 shown in FIG. 5 is a unit which is operated, when the R switch 52 or the D switch 53 has been selected (i.e., when advancing or reversing the vehicle 10), to control acceleration, deceleration, right turning and left turning of the vehicle 10. A joystick 61 is provided in the driving operation unit 60. The joystick 61 can be operated from a neutral position shown in FIG. 5 in a forward direction J1, a backward direction J2, a leftward direction J3, a rightward direction J4, or any direction between them. Through the operation of the joystick 61 by the driver from the neutral position in the forward direction J1, the backward direction J2, the leftward direction J3 or the rightward direction J4, the vehicle 10 can be accelerated, decelerated, turned left or turned right. Moreover, through the operation of the joystick 61 by the driver to a direction between the forward direction J1 and the rightward direction J4, the vehicle 10 can be turned right while being accelerated. Furthermore, the greater the operation amount S 1 of the joystick 61 from the neutral position in the forward direction J1, the higher the acceleration of the vehicle 10 becomes. Similarly, the greater the operation amount S2 of the joystick 61 from the neutral position in the backward direction J2, the higher the deceleration of the vehicle 10 becomes. Moreover, the greater the operation amount S3 or S4 of the joystick 61 from the neutral position in the leftward direction J3 or in the rightward direction J4, the higher the turning speed of the vehicle 10 becomes. The driving operation unit 60 outputs a signal indicating the operation state of the joystick 61 to the EVECU 40.

Hereinafter, the operation amount S 1 of the joystick 61 from the neutral position in the forward direction J1 will be referred to as the "accelerator operation amount S1 of the driving operation unit 60"; and the operation amount S2 in the backward direction J2 will be referred to as the "brake operation amount S2 of the driving operation unit 60". Moreover, the operation amount S3 in the leftward direction J3 will be referred to as the "leftward operation amount S3 of the driving operation unit 60"; and the operation amount S4 in the rightward direction J4 will be referred to as the "rightward operation amount S4 of the driving operation unit 60". In the present embodiment, both the accelerator operation amount S 1 and the brake operation amount S2 correspond to a first operation amount applied to the vehicle 10 for accelerating or decelerating the vehicle 10. Moreover, both the leftward operation amount S3 and the rightward operation amount S4 correspond to a second operation amount applied to the vehicle 10 for turning the vehicle 10.

As shown in FIG. 3, the vehicle 10 includes, as sensors for detecting its traveling state or the like, a yaw rate sensor 70, turning angle sensors 71 and 72 and wheel speed sensors 73 and 74.

The yaw rate sensor 70 detects an actual yaw rate Y, which is a yaw rate actually occurring in the vehicle 10, and outputs a signal indicating the detected actual yaw rate to the EVECU 40. As shown in FIG. 1, the actual yaw rate Y is a turning speed around a vertical axis passing through the center of gravity Gc of the vehicle 10. In the present embodiment, the yaw rate Y represents the turning speed of the vehicle 10 to the leftward direction D3 as a positive value and the turning speed of the vehicle 10 to the rightward direction D4 as a negative value.

The turning angle sensors 71 and 72 respectively detect the turning angles $\theta R$ and $\theta L$ of the driven wheels 21R and 21L about the pivots 210R and 210L thereof and output signals indicating the detected turning angles $\theta R$ and $\theta L$ to the EVECU 40. Hereinafter, the turning angles $\theta R$ and $\theta L$ of the driven wheels 21R and 21L will be referred to as the "driven-wheel steering angles $\theta R$ and $\theta L$".

The wheel speed sensors 73 and 74 respectively detect the rotational speeds $\omega FR$ and $\omega FL$ of the driven wheels 21R and 21L about the axes m 11R and m11L thereof (see FIG. 2) and output signals indicating the detected rotational speeds $\omega FR$ and $\omega FL$ to the EVECU 40. Hereinafter, the rotational speed $\omega FR$ of the right driven wheel 21R will be referred to as the "right driven wheel speed $\omega FR$"; and the rotational speed $\omega FL$ of the left driven wheel 21L will be referred to as the "left driven wheel speed $\omega FL$".

The EVECU 40 is constituted mainly of a microcomputer which includes a CPU, a memory and the like. The EVECU 40 centrally controls the traveling of the vehicle 10 by executing a program stored in advance in its memory. In the present embodiment, the EVECU 40 corresponds to both a control unit and a computer.

Specifically, the EVECU 40 receives the output signals of the shift operation unit 50, the driving operation unit 60, the yaw rate sensor 70, the turning angle sensors 71 and 72 and the wheel speed sensors 73 and 74. Then, from the output signals of the shift operation unit 50 and the driving operation unit 60, the EVECU 40 acquires both information on the depressed state of the switches 51 to 53 in the shift operation unit 50 and information on the operation amounts S1 to S4 of the joystick 61 in the driving operation unit 60. Moreover, from the output signals of the yaw rate sensor 70, the turning angle sensors 71 and 72 and the wheel speed sensors 73 and 74, the EVECU 40 acquires information on the actual yaw rate Y of the vehicle 10, information on the driven-wheel steering angles $\theta R$ and $\theta L$ and information on the driven wheel speeds $\omega FR$ and $\omega FL$. Furthermore, the EVECU 40 acquires information on the right driving wheel speed $\omega RR$ and information on the left driving wheel speed $\omega RL$ respectively from the MGECUs 33R and 33L of the in-wheel motors 30R and 30L. Thereafter, based on all the acquired information, the EVECU 40 sets both the first target braking/driving torque TR* and the second target braking/driving torque TL*.

For example, when the D switch 53 is selected in the shift operation unit 50 and the joystick 61 of the driving operation unit 60 is operated in the forward direction J1, the EVECU 40 sets the first target braking/driving torque TR* and the second target braking/driving torque TL* to the same positive value and send them respectively to the in-wheel motors 30R and 30L. Consequently, the same positive torque is applied by the in-wheel motors 30R and 30L to the driving wheels 22R and 22L; thus, the vehicle 10 is accelerated in the forward direction D1 shown in FIG. 1. In contrast, when the joystick 61 of the driving operation unit 60 is operated to the backward direction J2, the same regenerative torque is by the in-wheel motors 30R and 30L to the driving wheels 22R and 22L; thus, the vehicle 10 is decelerated.

Moreover, when the D switch 53 is selected in the shift operation unit 50 and the joystick 61 of the driving operation unit 60 is operated in the rightward direction J4, the EVECU 40 sets the first target braking/driving torque TR* and the second target braking/driving torque TL* to be different from each other. Specifically, the EVECU 40 sets the second target braking/driving torque TL* to be higher than the first target braking/driving torque TR*, and sends the set first target braking/driving torque TR* and second target braking/driving torque TL* respectively to the in-wheel motors 30R and 30L. Consequently, the torque applied by the in-wheel motor 30L to the left driving wheel 22L becomes higher than the torque applied by the in-wheel motor 30R to the right driving wheel 22R; thus, the vehicle 10 is turned to the rightward direction D4 shown in FIG. 1. In contrast, when the joystick 61 of the driving operation unit 60 is operated in the leftward direction J3, the torque applied by the in-wheel motor 30R to the right driving wheel 22R becomes higher than the torque applied by the in-wheel motor 30L to the left driving wheel 22L; thus, the vehicle 10 is turned to the leftward direction D3 shown in FIG. 1.

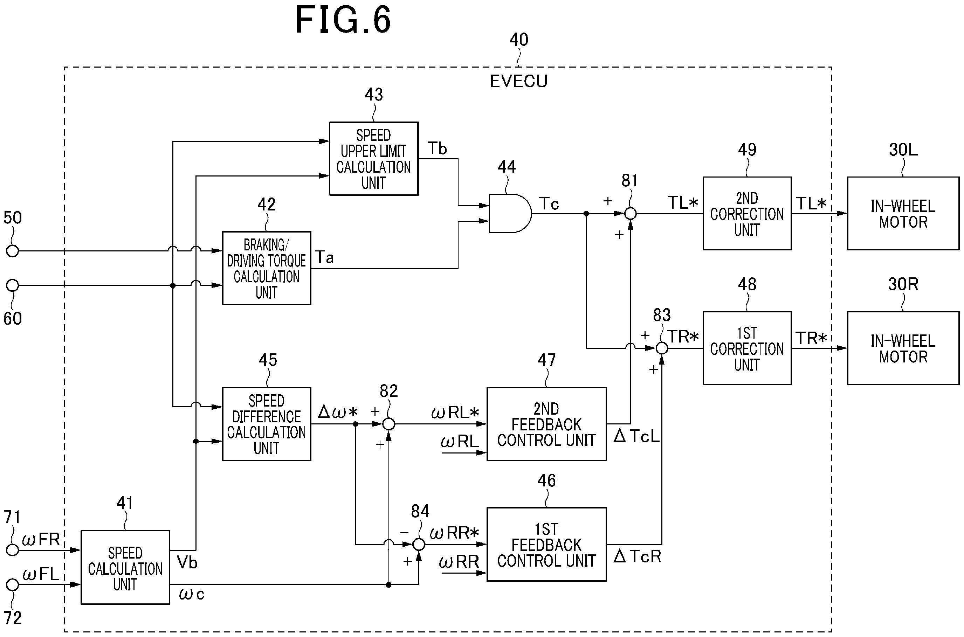

Next, a method of controlling the vehicle 10 by the EVECU 40 will be described in detail with reference to FIG. 6.

As shown in FIG. 6, the EVECU 40 includes, as a functional configuration realized by executing a program stored in its memory, a speed calculation unit 41, a braking/driving torque calculation unit 42, a speed upper limit calculation unit 43, a selection unit 44, a speed difference calculation unit 45, a first feedback control unit 46, a second feedback control unit 47, a first correction unit 48, a second correction unit 49, addition units 81 to 83 and a subtraction unit 84.

The speed calculation unit 41 determines, by calculating an average value of the driven wheel speeds $\omega$FR and $\omega$FL, an actual wheel speed $\omega$c (= ($\omega$FR + $\omega$FL)/2) of the vehicle 10. Further, based on the determined wheel speed $\omega$c, the speed calculation unit 41 calculates a vehicle speed Vb, which is a traveling speed of the vehicle 10, using an arithmetic expression or the like. The vehicle speed Vb and the wheel speed $\omega$c, both of which are calculated by the speed calculation unit 41, have a correlation with each other. It should be noted that the calculation method of the vehicle speed Vb is not limited to the method using the average value of the driven wheel speeds $\omega$FR and $\omega$FL, but may be any arbitrary method. The vehicle speed Vb calculated by the speed calculation unit 41 is inputted to each of the braking/driving torque calculation unit 42, the speed upper limit calculation unit 43 and the speed difference calculation unit 45. The wheel speed $\omega$c calculated by the speed calculation unit 41 is inputted to each of the addition unit 82 and the subtraction unit 84.

The braking/driving torque calculation unit 42 sets first basic braking/driving torque Ta based on the depressed state of the switches 51 to 53 in the shift operation unit 50, the operation amounts S1 to S4 of the joystick 61 in the driving operation unit 60 and the vehicle speed Vb. The first basic braking/driving torque Ta is a target value of the braking/driving torque to be applied to each of the right driving wheel 22R and the left driving wheel 22L for accelerating or decelerating the vehicle 10.

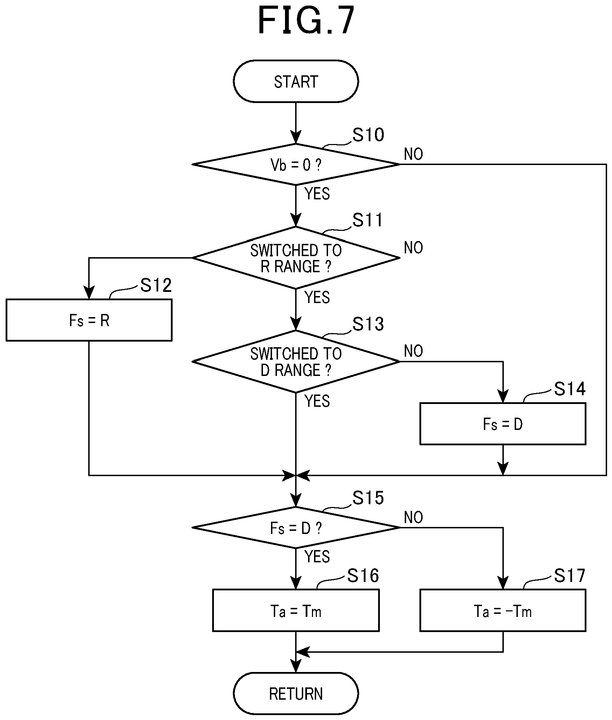

Specifically, the braking/driving torque calculation unit 42 sets the first basic braking/driving torque Ta by executing a process shown in FIG. 7. As shown in FIG. 7, the braking/driving torque calculation unit 42 first determines whether the vehicle speed Vb satisfies (Vb = 0[km/h]) (step S10). When the vehicle speed Vb satisfies (Vb = 0[km/h]) (step S10: YES), i.e., when the vehicle 10 is in a stopped state, the braking/driving torque calculation unit 42 further determines whether a switching operation to the R range has been performed (step S11). If the R switch 52 of the shift operation unit 50 has been depressed and the depressed state has continued for a predetermined time, the braking/driving torque calculation unit 42 determines that a switching operation to the R range has been performed (step S11: YES). In this case, the braking/driving torque calculation unit 42 sets a shift state management flag FS to "R" (step S12).

If it is determined in step S11 that no switching operation to the R range has been performed (step S11: NO), the braking/driving torque calculation unit 42 further determines whether a switching operation to the D range has been performed (step S13). If the D switch 53 of the shift operation unit 50 has been depressed and the depressed state has continued for a predetermined time, the braking/driving torque calculation unit 42 determines that a switching operation to the D range has been performed (step S13: YES). In this case, the braking/driving torque calculation unit 42 sets the shift state management flag FS to "D" (step S14).

If a negative determination is made in step S13 (step S13: NO), i.e., if neither an operation of switching the shift range to the R range nor an operation of switching the shift range to the D range has been performed with the vehicle 10 in a stopped state, the braking/driving torque calculation unit 42 proceeds to step S15. Moreover, if either step 12 or step S14 has been executed, i.e., if an operation of switching the shift range to the R range or to the D range has been performed, the braking/driving torque calculation unit 42 also proceeds to step S15. Furthermore, if it is determined in step S10 that the vehicle speed Vb satisfies (Vb > 0[km/h]) (step S10: NO), i.e., when the vehicle 10 is determined to be traveling, the braking/driving torque calculation unit 42 proceeds to step S15 without executing steps S11 to S14. By detecting a shift range switching operation using the above procedure, it becomes possible to switch the shift range of the vehicle 10 to the R range or to the D range only when the vehicle 10 is in a stopped state.

In step S15, the braking/driving torque calculation unit 42 determines whether the shift state management flag Fs has been set to "D". If the shift state management flag FS has been set to "D" (step S15: YES), i.e., when the shift range of the vehicle 10 has been set to the D range, the braking/driving torque calculation unit 42 sets the first basic braking/driving torque Ta to a map calculation value Tm (step S16).

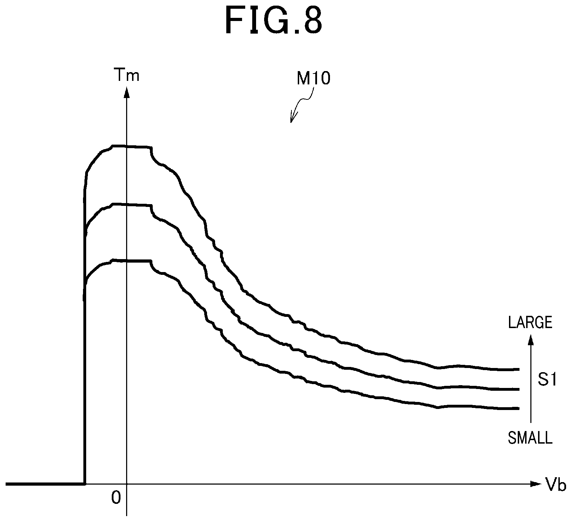

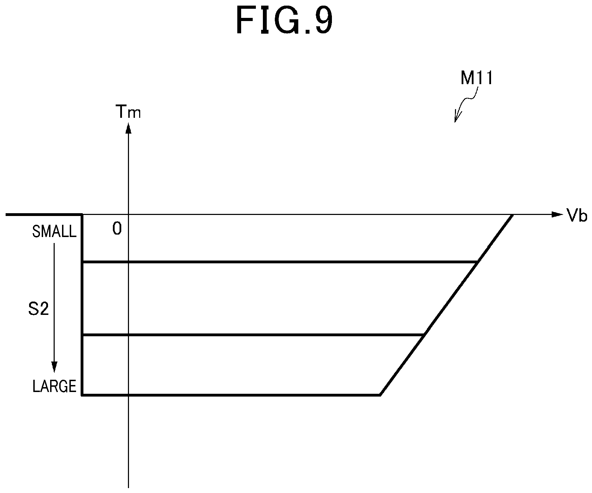

Specifically, in the memory of the EVECU 40, there are stored in advance both a driving torque calculation map M10 as shown in FIG. 8 and a braking torque calculation map M11 as shown in FIG. 9.

The driving torque calculation map M10 shown in FIG. 8 is a map which is obtained by mapping the relationship between the vehicle speed Vb and the map calculation value Tm. In the driving torque calculation map M10, the map calculation value Tm is varied according to the accelerator operation amount S 1 of the driving operation unit 60 by switching between graphs, each of which represents the relationship between the vehicle speed Vb and the map calculation value Tm, according to the accelerator operation amount S 1. The map calculation value Tm calculated using the driving torque calculation map M10 is a target value of the driving torque to be applied to each of the right driving wheel 22R and the left driving wheel 22L for accelerating the vehicle 10.

The braking torque calculation map M11 shown in FIG. 9 is also a map which is obtained by mapping the relationship between the vehicle speed Vb and the map calculation value Tm. In the braking torque calculation map M11, the map calculation value Tm is varied according to the brake operation amount S2 of the driving operation unit 60 by switching between graphs, each of which represents the relationship between the vehicle speed Vb and the map calculation value Tm, according to the brake operation amount S2. The map calculation value Tm calculated using the braking torque calculation map M11 is a target value of the braking torque to be applied to each of the right driving wheel 22R and the left driving wheel 22L for decelerating the vehicle 10.

When the joystick 61 of the driving operation unit 60 is operated in the forward direction J1, i.e., when an acceleration operation is performed, the braking/driving torque calculation unit 42 calculates, using the driving torque calculation map M10 shown in FIG. 8, the map calculation value Tm based on the vehicle speed Vb and the accelerator operation amount S 1 of the driving operation unit 60. In contrast, when the joystick 61 of the driving operation unit 60 is operated in the backward direction J2, i.e., when a deceleration operation is performed, the braking/driving torque calculation unit 42 calculates, using the braking torque calculation map M11 shown in FIG. 9, the map calculation value Tm based on the vehicle speed Vb and the brake operation amount S2 of the driving operation unit 60. Thereafter, the braking/driving torque calculation unit 42 sets the first basic braking/driving torque Ta to the map calculation value Tm calculated as above.

On the other hand, as shown in FIG. 7, if the shift state management flag Fs has been set to "R", i.e., if the shift range of the vehicle 10 has been set to the R range, the braking/driving torque calculation unit 42 makes a negative determination in step S15 (step S15: NO). In this case, the braking/driving torque calculation unit 42 first calculates the map calculation value Tm using the driving torque calculation map M10 shown in FIG. 8 or the braking torque calculation map M11 shown in FIG. 9; then, the braking/driving torque calculation unit sets the first basic braking/driving torque Ta to "-Tm" that is obtained by reversing the sign of the map calculation value Tm (step S17).

As shown in FIG. 6, the first basic braking/driving torque Ta calculated by the braking/driving torque calculation unit 42 is inputted to the selection unit 44.

The speed upper limit calculation unit 43 sets second basic braking/driving torque Tb based on the vehicle speed Vb and the leftward operation amount S3 and the rightward operation amount S4 of the driving operation unit 60. The second basic braking/driving torque Tb is an upper limit value of the braking/driving torque to be applied to each of the right driving wheel 22R and the left driving wheel 22L for limiting the traveling speed of the vehicle 10 so as to be lower than or equal to a predetermined upper limit speed.

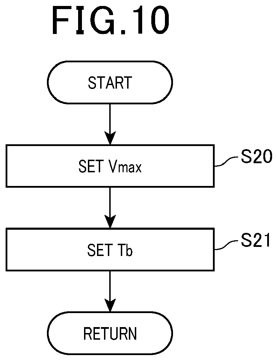

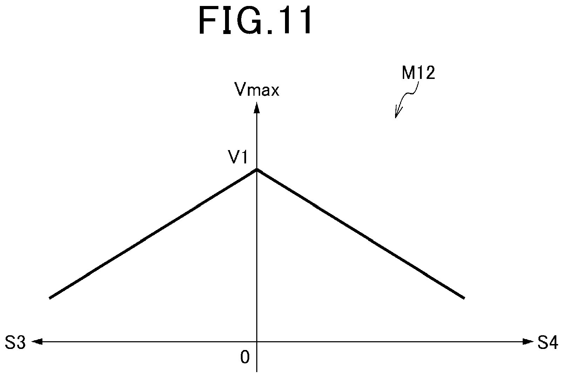

Specifically, the speed upper limit calculation unit 43 sets the second basic braking/driving torque Tb by executing a process shown in FIG. 10. As shown in FIG. 10, the speed upper limit calculation unit 43 first calculates an upper limit speed Vmax that is an upper limit value of the traveling speed of the vehicle 10 (step S20). In the memory of the EVECU 40, there is stored in advance an upper limit vehicle speed calculation map M12 shown in FIG. 11. The upper limit vehicle speed calculation map M12 is a map which is obtained by mapping the relationship between the leftward operation amount S3 and the rightward operation amount S4 of the driving operation unit 60 and the upper limit speed Vmax. In the upper limit vehicle speed calculation map M12, the upper limit speed Vmax is set to a predetermined speed V1 if both the leftward operation amount S3 and the rightward operation amount S4 of the driving operation unit 60 are 0, i.e., if the vehicle 10 is not turned. The predetermined speed V1 may be, for example, 20[km/h]. Moreover, in the upper limit vehicle speed calculation map M12, the greater the leftward operation amount S3 or the rightward operation amount S4 of the driving operation unit 60, the lower the upper limit speed Vmax is set to be.

As shown in FIG. 10, after step S20, the speed upper limit calculation unit 43 calculates the second basic braking/driving torque Tb (step S21). Specifically, the speed upper limit calculation unit 43 first calculates, based on the current vehicle speed Vb and the upper limit speed Vmax calculated in step S20, a speed deviation eV using the following Equation f2.

$$eV = Vmax - Vb \qquad (f2)$$

Then, the speed upper limit calculation unit 43 calculates, based on the calculated speed deviation eV, the second basic braking/driving torque Tb using the following Equation f3. In addition, in Equation f3, Kp and Ki respectively represent a proportional gain and an integral gain, both of which are set in advance.

$$Tb = Kp \times eV + Ki \times \int eV \qquad (f3)$$

In this manner, the speed upper limit calculation unit 43 sets the second basic braking/driving torque Tb by performing feedback control based on the deviation eV between the current vehicle speed Vb and the upper limit speed Vmax.

As shown in FIG. 6, the second basic braking/driving torque Tb set by the speed upper limit calculation unit 43 is inputted to the selection unit 44.

The selection unit 44 sets final basic braking/driving torque Tc to the smaller one of the first basic braking/driving torque Ta calculated by the braking/driving torque calculation unit 42 and the second basic braking/driving torque Tb calculated by the speed upper limit calculation unit 43. The basic braking/driving torque Tc set by the selection unit 44 is then inputted to each of the addition units 81 and 83.

The speed difference calculation unit 45 sets a target rotational speed difference $\Delta\omega^*$ based on the vehicle speed Vb and the leftward operation amount S3 and the rightward operation amount S4 of the driving operation unit 60. The target rotational speed difference $\Delta\omega^*$ is a target value of the speed difference to be caused between the right driving wheel speed $\omega$RR and the left driving wheel speed $\omega$RL for turning the vehicle 10.

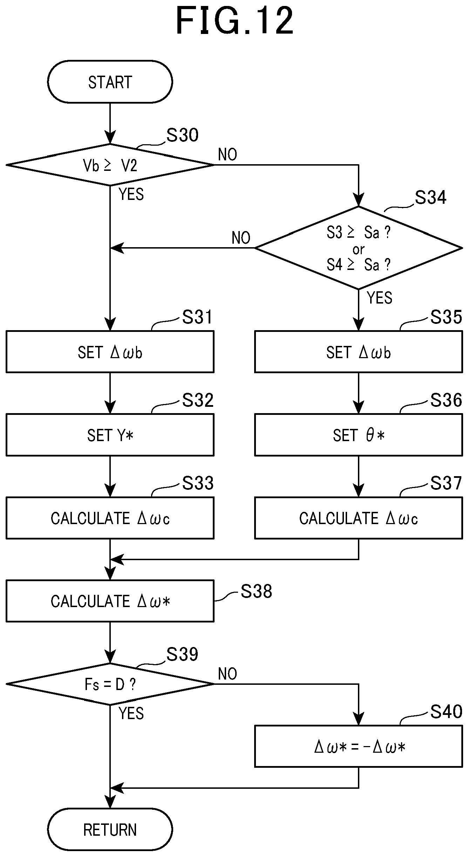

Specifically, the speed difference calculation unit 45 sets the target rotational speed difference $\Delta\omega^*$ by executing a process shown in FIG. 12. As shown in FIG. 12, the speed difference calculation unit 45 first determines whether the vehicle speed Vb is higher than or equal to a predetermined speed V2 (step S30). The predetermined speed V2 may be set to, for example, 3 [km/h]. In addition, the predetermined speed V2 may have hysteresis. That is, the predetermined speed V2 may be set to, for example, (3 [km/h] + a) when the vehicle speed Vb increases and to (3 [km/h] - a) when the vehicle speed Vb decreases, where a is a predetermined value. The predetermined speed V2 is set to a value with which it is possible to determine whether the vehicle 10 is in a traveling state.

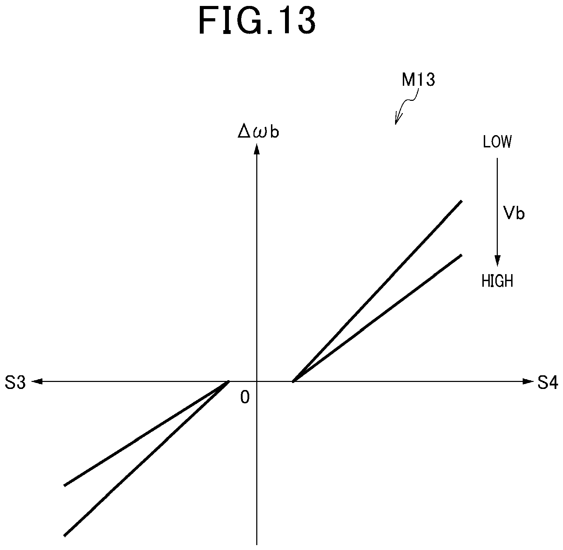

If the vehicle speed Vb is higher than or equal to the predetermined speed V2 (step S30: YES), i.e., if the vehicle 10 is in a traveling state, the speed difference calculation unit 45 sets, based on the leftward operation amount S3 and the rightward operation amount S4 of the driving operation unit 60, a basic rotational speed difference $\Delta\omega$b using a during-traveling speed difference calculation map M13 shown in FIG. 13 (step S31). The basic rotational speed difference $\Delta\omega$b is a basic value of the target rotational speed difference $\Delta\omega^*$. The during-traveling speed difference calculation map M13 shown in FIG. 13 is stored in advance in the memory of the EVECU 40. The during-traveling speed difference calculation map M13 is a map which is obtained by mapping the relationship between the leftward operation amount S3 and the rightward operation amount S4 of the driving operation unit 60 and the basic rotational speed difference $\Delta\omega$b. In the during-traveling speed difference calculation map M13, the basic rotational speed difference $\Delta\omega$b is varied according to the vehicle speed Vb by switching between graphs, each of which represents the relationship between the leftward operation amount S3 or the rightward operation amount S4 of the driving operation unit 60 and the basic rotational speed difference $\Delta\omega$b, according to the vehicle speed Vb. Specifically, the lower the vehicle speed Vb, the greater the basic rotational speed difference $\Delta\omega$b is set to be. Consequently, the lower the vehicle speed Vb, the greater the speed difference between the right driving wheel speed $\omega$RR and the left driving wheel speed $\omega$RL will become and thus the faster the turning speed of the vehicle 10 will become. The during-traveling speed difference calculation map M13 is used for determining the basic rotational speed difference $\Delta\omega$b when turning the vehicle 10 during traveling of the vehicle 10.

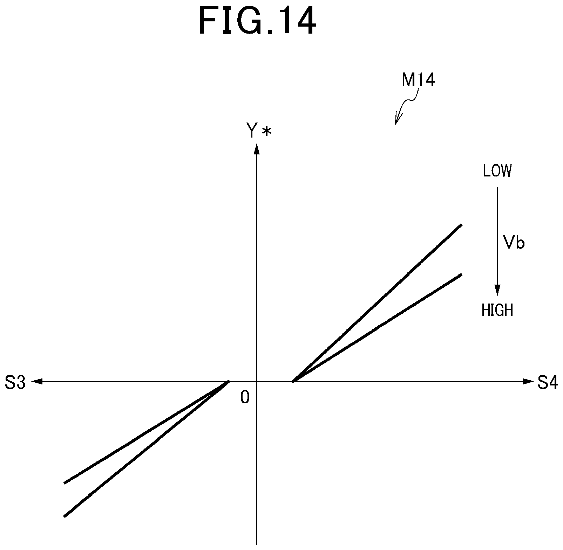

As shown in FIG. 12, after step S31, the speed difference calculation unit 45 sets, based on the leftward operation amount S3 and the rightward operation amount S4 of the driving operation unit 60, a target yaw rate Y* using a target yaw rate calculation map M14 shown in FIG. 14 (step S32). The target yaw rate Y* is a target value of the yaw rate Y of the vehicle 10. The target yaw rate calculation map M14 is a map which is obtained by mapping the relationship between the leftward operation amount S3 and the rightward operation amount S4 of the driving operation unit 60 and the target yaw rate Y*. In the target yaw rate calculation map M14, the target yaw rate Y* is varied according to the vehicle speed Vb by switching between graphs, each of which represents the relationship between the leftward operation amount S3 or the rightward operation amount S4 of the driving operation unit 60 and the target yaw rate Y*, according to the vehicle speed Vb. Specifically, the lower the vehicle speed Vb, the higher the target yaw rate Y* is set to be. Consequently, the lower the vehicle speed Vb, the higher the yaw rate Y of the vehicle 10 will become and thus the faster the turning speed of the vehicle 10 will become.

As shown in FIG. 12, after step S32, the speed difference calculation unit 45 calculates a speed difference correction value $\Delta\omega$c (step S33). Specifically, the speed difference calculation unit 45 first calculates, based on the current actual yaw rate Y of the vehicle 10 and the target yaw rate Y* calculated in step S32, a yaw rate deviation eY using the following Equation f4.

$$eY = Y^* - Y \qquad (f4)$$

Then, the speed difference calculation unit 45 calculates, based on the calculated yaw rate deviation eY, the speed difference correction value $\Delta\omega$c using the following Equation f5.

$$\Delta\omega c = Kp \times eY + Ki \times \int eY \qquad (f5)$$

Further, the speed difference calculation unit 45 limits, using the following Equation f6, the speed difference correction value $\Delta\omega$c to a range from a lower limit value $\Delta\omega$min to an upper limit value $\Delta\omega$max. In addition,

both the lower limit value Δωmin and the upper limit value Δωmax are set in advance.

$$\Delta\omega min < \Delta\omega c < \Delta\omega max \qquad (f6)$$

On the other hand, if it is determined in step S30 that the vehicle speed Vb is lower than the predetermined speed V2 (step S30: NO), i.e., if the vehicle 10 is in a stopped state or in a state of traveling at a very low speed, the speed difference calculation unit 45 determines whether either one of the leftward operation amount S3 and the rightward operation amount S4 of the driving operation unit 60 is greater than or equal to a predetermined amount Sa (step S34). The predetermined amount Sa is set so as to make it possible to determine whether the joystick 61 of the driving operation unit 60 is operated to a limit in the leftward direction J3 or in the rightward direction J4. If both the leftward operation amount S3 and the rightward operation amount S4 of the driving operation unit 60 are less than the predetermined amount Sa (step S34: NO), i.e., when the joystick 61 of the driving operation unit 60 is operated to the limit neither in the leftward direction J3 nor in the rightward direction J4, the speed difference calculation unit 45 executes steps S31 to S33. Consequently, the speed difference calculation unit 45 calculates the speed difference correction value Δωc using the above Equation f5.

In this manner, if the vehicle 10 is in a traveling state, or if the vehicle 10 is in a stopped state or in a state of traveling at a very low speed but the joystick 61 of the driving operation unit 60 is not operated to the limit in the leftward direction J3 or in the rightward direction J4, the speed difference calculation unit 45 sets the speed difference correction value Δωc by performing feedback control based on the deviation eY between the actual yaw rate Y and the target yaw rate Y* of the vehicle 10.

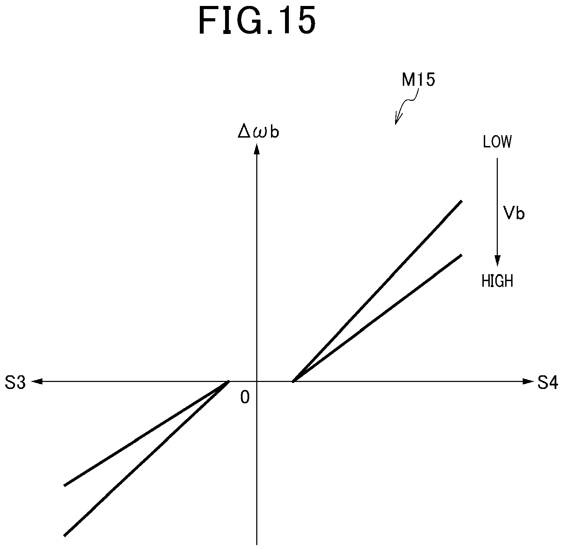

In contrast, if the vehicle 10 is in a stopped state or in a state of traveling at a very low speed (step S30: NO) and the joystick 61 of the driving operation unit 60 is operated to the limit in the leftward direction J3 or in the rightward direction J4 (step S34: YES), the speed difference calculation unit 45 sets, based on the leftward operation amount S3 and the rightward operation amount S4 of the driving operation unit 60, the basic rotational speed difference Δωb using a during-stopping speed difference calculation map M15 shown in FIG. 15 (step S35). The during-stopping speed difference calculation map M15 shown in FIG. 15 is stored in advance in the memory of the EVECU 40. The during-stopping speed difference calculation map M15 is a map which is obtained by mapping the relationship between the leftward operation amount S3 and the rightward operation amount S4 of the driving operation unit 60 and the basic rotational speed difference Δωb. In the during-stopping speed difference calculation map M15, the basic rotational speed difference Δωb is varied according to the vehicle speed Vb by switching between graphs, each of which represents the relationship between the leftward operation amount S3 or the rightward operation amount S4 of the driving operation unit 60 and the basic rotational speed difference Δωb, according to the vehicle speed Vb. The during-stopping speed difference calculation map M15 is used for determining the basic rotational speed difference Δωb when turning the vehicle 10 during stopping of the vehicle 10, in other words, when turning the vehicle 10 on the spot.

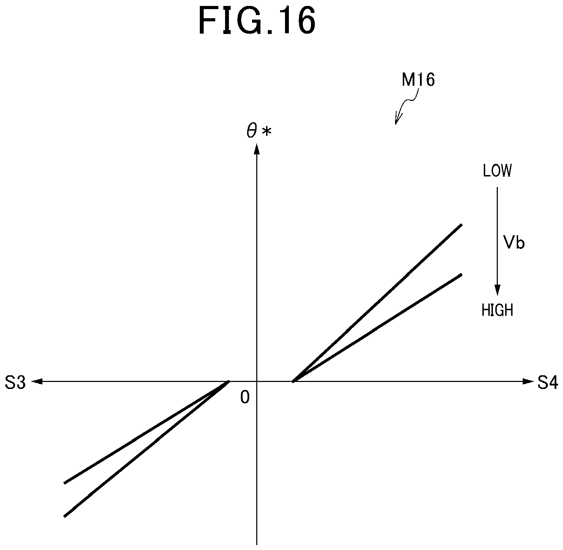

As shown in FIG. 12, after step S35, the speed difference calculation unit 45 sets, based on the leftward operation amount S3 and the rightward operation amount S4 of the driving operation unit 60, a target steering angle θ* using a target steering angle calculation map M16 shown in FIG. 16 (step S36). The target steering angle θ* is a target value of the driven-wheel steering angles θR and θL. The target steering angle calculation map M16 is a map which is obtained by mapping the relationship between the leftward operation amount S3 and the rightward operation amount S4 of the driving operation unit 60 and the target steering angle θ*. In the target steering angle calculation map M16, the target steering angle θ* is varied according to the vehicle speed Vb by switching between graphs, each of which represents the relationship between the leftward operation amount S3 or the rightward operation amount S4 of the driving operation unit 60 and the target steering angle θ*, according to the vehicle speed Vb. Specifically, the lower the vehicle speed Vb, the larger the target steering angle θ* is set to be. Consequently, the lower the vehicle speed Vb, the larger the driven-wheel steering angles θR and θL of the vehicle 10 will become and thus the smaller the turning radius of the vehicle 10 will become. As a result, with the smaller the turning radius of the vehicle 10, the vehicle 10 will turn on the spot.

As shown in FIG. 12, after step S36, the speed difference calculation unit 45 calculates the speed difference correction value Δωc (step S37). Specifically, the speed difference calculation unit 45 first calculates, based on the current driven-wheel steering angle θ and the target steering angle θ* calculated in step S36, a steering angle deviation eθ using the following Equation f7. It should be noted that either one of the driven-wheel steering angles θR and θL or an average value of the driven-wheel steering angles θR and θL may be used as the driven-wheel steering angle θ.

$$e\theta = \theta* - \theta \qquad (f7)$$

Then, the speed difference calculation unit 45 calculates, based on the calculated udder angle deviation eθ, the speed difference correction value Δωc using the following Equation f8.

$$\Delta\omega c = Kp \times e\theta + Ki \times \int e\theta \qquad (f8)$$

Further, the speed difference calculation unit 45 limits, using the above Equation f6, the speed difference correction value $\Delta\omega c$ to the range from the lower limit value $\Delta\omega min$ to the upper limit value $\Delta\omega max$.

In this manner, if the vehicle 10 is in a stopped state or in a state of traveling at a very low speed and the joystick 61 of the driving operation unit 60 is operated to the limit in the leftward direction J3 or in the rightward direction J4, the speed difference calculation unit 45 sets the speed difference correction value $\Delta\omega c$ by performing feedback control based on the deviation $e\theta$ between the driven-wheel steering angle $\theta$ and the target steering angle $\theta^*$.

The speed difference calculation unit 45 sets the basic rotational speed difference $\Delta\omega b$ in step S31 or step S35, calculates the speed difference correction value $\Delta\omega c$ in step S33 or step S37, and then calculates the target rotational speed difference $\Delta\omega^*$ using the following Equation f9 (step S38).

$$\Delta\omega^* = \Delta\omega b + \Delta\omega c \qquad (f9)$$

Thereafter, the speed difference calculation unit 45 determines whether the shift state management flag Fs has been set to "D" (step S39). If the shift state management flag Fs has been set to "D" (step S39: YES), the speed difference calculation unit 45 terminates the process shown in FIG. 12. In this case, the speed upper limit calculation unit 43 uses the target rotational speed difference $\Delta\omega^*$ calculated by the above Equation f9 as a calculation result.

On the other hand, if the shift state management flag Fs has been set to "R", the speed difference calculation unit 45 makes a negative determination in step S39 (step S39: NO). In this case, the speed difference calculation unit 45 reverses, as shown in the following Equation f10, the sign of the target rotational speed difference $\Delta\omega^*$ calculated by the above Equation f9 (step S40); then, the speed difference calculation unit 45 uses $-\Delta\omega^*$ as a calculation result.

$$\Delta\omega^* = -\Delta\omega^* \qquad (f10)$$

As shown in FIG. 6, the target rotational speed difference $\Delta\omega^*$ set by the speed difference calculation unit 45 is inputted to each of the addition unit 82 and the subtraction unit 84.

The addition unit 82 calculates, by adding the target rotational speed difference $\Delta\omega^*$ set by the speed difference calculation unit 45 to the wheel speed $\omega c$, a target left driving wheel speed $\omega RL^*$ (= $\omega c + \Delta\omega^*$). In addition, if the target left driving wheel speed $\omega RL^*$ satisfies ($\omega RL^* < 0$), i.e., if the target left driving wheel speed $\omega RL^*$ has a negative value, the addition unit 82 executes a lower limit guarding process to set the target left driving wheel speed $\omega RL^*$ to 0. The target left driving wheel speed $\omega RL^*$ calculated by the addition unit 82 is then inputted to the second feedback control unit 47. In the present embodiment, the target left driving wheel speed $\omega RL^*$ corresponds to a second target rotational speed.

The subtraction unit 84 calculates, by subtracting the target rotational speed difference $\Delta\omega^*$ set by the speed difference calculation unit 45 from the wheel speed $\omega c$, a target right driving wheel speed $\omega RR^*$ (= $\omega c - \Delta\omega^*$). In addition, if the target right driving wheel speed $\omega RR^*$ satisfies ($\omega RR^* < 0$), i.e., if the target right driving wheel speed $\omega RR^*$ has a negative value, the subtraction unit 84 executes a lower limit guarding process to set the target right driving wheel speed $\omega RR^*$ to 0. The target right driving wheel speed $\omega RR^*$ calculated by the subtraction unit 84 is then inputted to the first feedback control unit 46. In the present embodiment, the target right driving wheel speed $\omega RR^*$ corresponds to a first target rotational speed.

The first feedback control unit 46 calculates right driving wheel correction torque $\Delta TcR$ by performing feedback control to make the actual right driving wheel speed $\omega RR$ follow the target right driving wheel speed $\omega RR^*$. Specifically, the first feedback control unit 46 calculates a rotational speed deviation $e\omega R$ using the following Equation f11.

$$e\omega R = \omega RR^* - \omega RR \qquad (f11)$$

Then, the first feedback control unit 46 calculates, based on the calculated rotational speed deviation $e\omega R$, the right driving wheel correction torque $\Delta TcR$ using the following Equation f12.

$$\Delta TcR = Kp \times e\omega R + Ki \times \int e\omega R \qquad (f12)$$

Further, the first feedback control unit 46 limits, using the following Equation f13, the right driving wheel correction torque $\Delta TcR$ to a range from a lower limit value $\Delta Tmin$ to an upper limit value $\Delta Tmax$. In addition, both the lower limit value $\Delta Tmin$ and the upper limit value $\Delta Tmax$ are set in advance.

$$\Delta Tmin < \Delta TcR < \Delta Tmax \qquad (f13)$$

The right driving wheel correction torque $\Delta TcR$ calculated by the first feedback control unit 46 is then inputted to the addition unit 83. In the present embodiment, the right driving wheel correction torque $\Delta TcR$ corresponds to first correction torque.

The second feedback control unit 47 calculates, based on the actual left driving wheel speed $\omega RL$ and the target left driving wheel speed $\omega RL^*$, left driving wheel correction torque $\Delta TcL$ by performing calculation similar to that performed by the first feedback control unit 46. The left driving wheel correction torque $\Delta TcL$ calculated

by the second feedback control unit 47 is then inputted to the addition unit 81. In the present embodiment, the left driving wheel correction torque ΔTcL corresponds to second correction torque.

The addition unit 83 calculates, by adding the right driving wheel correction torque ΔTcR calculated by the first feedback control unit 46 to the basic braking/driving torque Tc set by the selection unit 44, the first target braking/driving torque TR* (= Tc + ΔTcR). The first target braking/driving torque TR* calculated by the addition unit 83 is then inputted to the first correction unit 48.

The first correction unit 48 performs a correction process on the first target braking/driving torque TR* calculated by the addition unit 83. For example, the first correction unit 48 executes a process to limit the first target braking/driving torque TR* to a preset upper limit value or lower limit value so as to protect components of the vehicle 10 and/or to protect the battery installed in the vehicle 10. Moreover, the first correction unit 48 performs a filtering process on the first target braking/driving torque TR* so as to prevent occurrence of a shock or the like in the vehicle 10. The first target braking/driving torque TR* corrected by the first correction unit 48 is then sent to the in-wheel motor 30R. Consequently, the torque applied by the in-wheel motor 30R to the right driving wheel 22R is controlled to the first target braking/driving torque TR*.

The addition unit 81 calculates, by adding the left driving wheel correction torque ΔTcL calculated by the second feedback control unit 47 to the basic braking/driving torque Tc set by the selection unit 44, the second target braking/driving torque TL* (= Tc + ΔTcL). The second target braking/driving torque TL* calculated by the addition unit 81 is then inputted to the second correction unit 49.

The second correction unit 49 performs, on the second target braking/driving torque TL*, a correction process similar to that performed by the first correction unit 48. The second target braking/driving torque TL* corrected by the second correction unit 49 is then sent to the in-wheel motor 30L. Consequently, the torque applied by the in-wheel motor 30L to the left driving wheel 22L is controlled to the second target braking/driving torque TL*.

Through the calculation of the first target braking/driving torque TR* and the second target braking/driving torque TL* as shown in FIG. 6, the average value thereof is set to the basic braking/driving torque Tc. That is, the average value of the braking/driving torque applied to the right driving wheel 22R and the braking/driving torque applied to the left driving wheel 22L is controlled to the basic braking/driving torque Tc. By this first torque control, advancing and reversing of the vehicle 10 is controlled. Moreover, in the first torque control, the basic braking/driving torque Tc is calculated based on the accelerator operation amount S 1 and the brake operation amount S2 of the driving operation unit 60. Therefore, a user can accelerate and decelerate the vehicle 10 by operating the joystick 61 of the driving operation unit 60 shown in FIG. 5 in the forward direction J1 and the backward direction J2.

On the other hand, a torque deviation occurs between the first target braking/driving torque TR* and the second target braking/driving torque TL* according to the target rotational speed difference Δω*. That is, a predetermined torque deviation occurs between the braking/driving torque applied to the right driving wheel 22R and the braking/driving torque applied to the left driving wheel 22L. By this second torque control, right turning and left turning of the vehicle 10 is controlled. Moreover, in the second torque control, the target rotational speed difference Δω* is calculated based on the leftward operation amount S3 and the rightward operation amount S4 of the driving operation unit 6. Therefore, the user can cause the vehicle 10 to turn left and turn right by operating the joystick 61 of the driving operation unit 60 shown in FIG. 5 in the leftward direction J3 and the rightward direction J4.

Next, examples of operation of the vehicle 10 according to the present embodiment will be described.

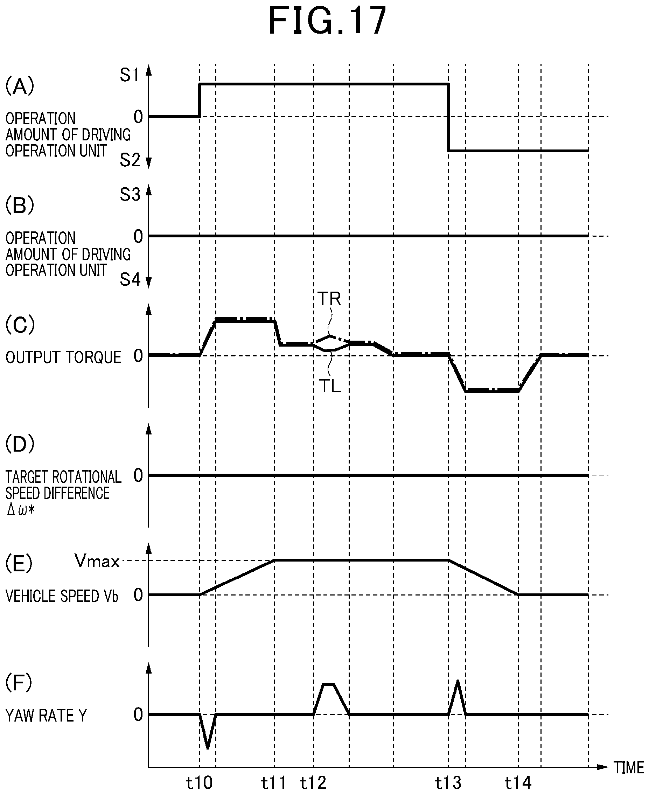

FIGS. 17(A) to (F) are timing charts illustrating the change with time of each parameter when the driver accelerates the vehicle 10 to steadily travel straight ahead and then decelerates the vehicle 10.

In response to the operation of the joystick 61 of the driving operation unit 60 in the forward direction J1 by the driver at a time instant t10, the accelerator operation amount S 1 of the driving operation unit 60 increases as shown in FIG. 17(A). Consequently, the basic braking/driving torque Tc increases in the positive direction; thus, as shown in FIG. 17(C), both the output torque TR of the motor-generator 31R and the output torque TL of the motor-generator 31L are first increased in the positive direction and then controlled to a constant value. As a result, as shown in FIG. 17(E), from the time instant t10, the vehicle speed Vb increases, i.e., the vehicle 10 is accelerated.

Thereafter, in response to the vehicle speed Vb reaching the upper limit speed Vmax at a time instant t11, the basic braking/driving torque Tc is set so as to keep the vehicle speed Vb at the upper limit speed Vmax. Consequently, as shown in FIG. 17(C), from the time instant t11, both the output torque TR of the motor generator 31R and the output torque TL of the motor-generator 31L are limited.

At the time instant t11, the vehicle speed Vb is higher than or equal to the predetermined speed V2 used in the determination in step S30 shown in FIG. 12. Moreover, when the vehicle 10 is driven to travel straight ahead, both the leftward operation amount S3 and the rightward operation amount S4 of the driving operation unit 60 are equal to 0, as shown in FIG. 17(B). Therefore, the target yaw rate Y* is set to 0 in step S32 shown in FIG. 12. Consequently, the target rotational speed difference Δω* is set to 0 as shown in FIG. 17(D); and both the right driving wheel correction torque ΔTcR and the left driving wheel correction torque $\Delta$TcL are set based on the target rotational speed difference $\Delta\omega^*$. As a result, both the output torque TR of the motor-generator 31R and the output torque TL of the motor-generator 31L are controlled so that the actual yaw rate Y of the vehicle 10 becomes 0.

Therefore, even if a difference is caused by some reasons between the output torque TR of the motor-generator 31R and the output torque TL of the motor-generator 31L at a time instant t12 as shown in FIG. 17(C) and thus a change occurs in the actual yaw rate Y of the vehicle 10 as shown in FIG. 17(F), the difference between the output torque TR of the motor-generator 31R and the output torque TL of the motor-generator 31L is controlled to become 0. Consequently, after the time instant t12, the actual yaw rate Y of the vehicle 10 converges to 0; thus, the stability of the vehicle 10 traveling straight ahead can be ensured.

Thereafter, in response to the operation of the joystick 61 of the driving operation unit 60 in the backward direction J2 by the driver at a time instant t13, the brake operation amount S2 of the driving operation unit 60 increases as shown in FIG. 17(A). Consequently, the basic braking/driving torque Tc increases in the negative direction; thus, as shown in FIG. 17(C), both the output torque TR of the motor-generator 31R and the output torque TL of the motor-generator 31L are first increased in the negative direction and then controlled to a constant value. As a result, as shown in FIG. 17(E), from the time instant t13, the vehicle speed Vb decreases, i.e., the vehicle 10 is decelerated; then, at a time instant t14, the vehicle 10 is stopped.

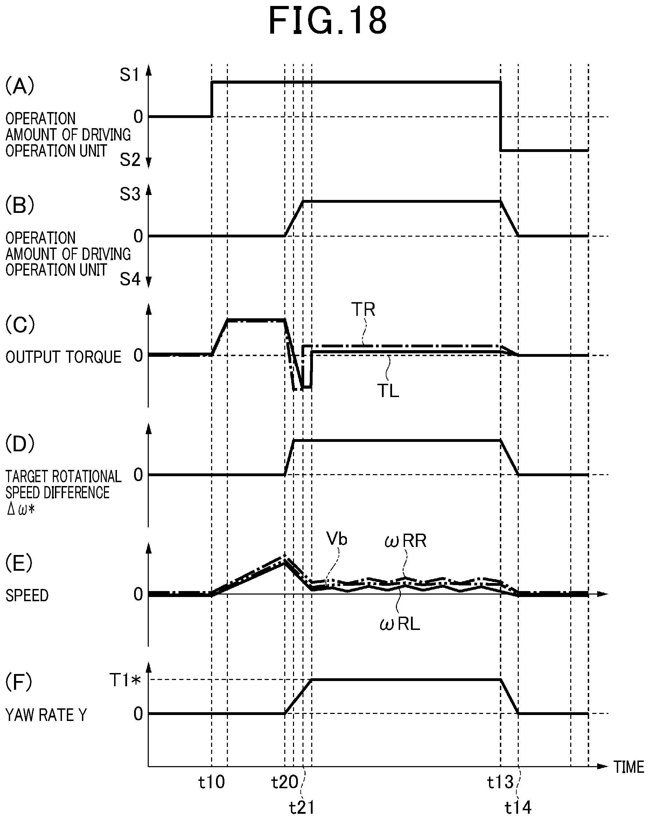

FIGS. 18(A) to (F) are timing charts illustrating the change with time of each parameter when the driver accelerates the vehicle 10 and then turns the vehicle 10 with the vehicle speed Vb being higher than or equal to the predetermined speed V2.

In response to the operation of the joystick 61 of the driving operation unit 60 in the leftward direction J3 by the driver at a time instant t20 after accelerating the vehicle 10 at a time instant t10, the leftward operation amount S3 of the driving operation unit 60 increases as shown in FIG. 18(B). With the increase in the leftward operation amount S3 of the driving operation unit 60, the value of the upper limit speed Vmax, which is set using the upper limit vehicle speed calculation map M12 shown in FIG. 11, decreases. Consequently, the upper limit speed Vmax becomes lower than the current vehicle speed Vb, so that the speed deviation eV expressed by the above Equation f2 is set to a negative value and thus the second basic braking/driving torque Tb is also set to a negative value. As a result, as shown in FIG. 18(C), negative torque is outputted from both the motor-generators 31R and 31L. That is, braking torque is applied to both the right driving wheel 22R and the left driving wheel 22L. Consequently, as shown in FIG. 18(E), the vehicle speed Vb decreases from the time instant t20.

On the other hand, with the increase in the leftward operation amount S3 of the driving operation unit 60 from the time instant t20 as shown in FIG. 18(B), the target yaw rate Y* is set to a positive value using the target yaw rate calculation map M14 shown in FIG. 14. With the feedback control performed based on the deviation between the target yaw rate Y* and the actual yaw rate Y of the vehicle 10, the target rotational speed difference $\Delta\omega^*$ increases as shown in FIG. 18(D). Consequently, the right driving wheel correction torque $\Delta$TcR is set to be higher than the left driving wheel correction torque $\Delta$TcL; thus, as shown in FIG. 18(C), the output torque TR of the motor-generator 31R becomes higher than the output torque TL of the motor-generator 31L. As a result, as shown in FIG. 18(E), the right driving wheel speed $\omega$RR becomes faster than the left driving wheel speed $\omega$RL, thereby causing the vehicle 10 to be turned left.

Thereafter, the leftward operation amount S3 of the driving operation unit 60 is set to a predetermined value S3a at a time instant t21, and then kept at the predetermined value S3a; thus, the target yaw rate Y* is set to a predetermined value Y1* corresponding to the leftward operation amount S3a. Consequently, the yaw rate feedback control is performed to keep the actual yaw rate Y of the vehicle 10 at the target yaw rate Y1* as shown in FIG. 18(F), thereby keeping a deviation between the output torque TR of the motor-generator 31R and the output torque TL of the motor-generator 31L as shown in FIG. 18(C). As a result, the state of the right driving wheel speed $\omega$RR being faster than the left driving wheel speed $\omega$RL is continued as shown in FIG. 18(E), so that the vehicle 10 is turned to the leftward direction D3 with the actual yaw rate Y of the vehicle 10 kept at the target yaw rate Y1 *. Moreover, as shown by a two-dot chain line in FIG. 18(E), the vehicle speed Vb is kept at a predetermined value.

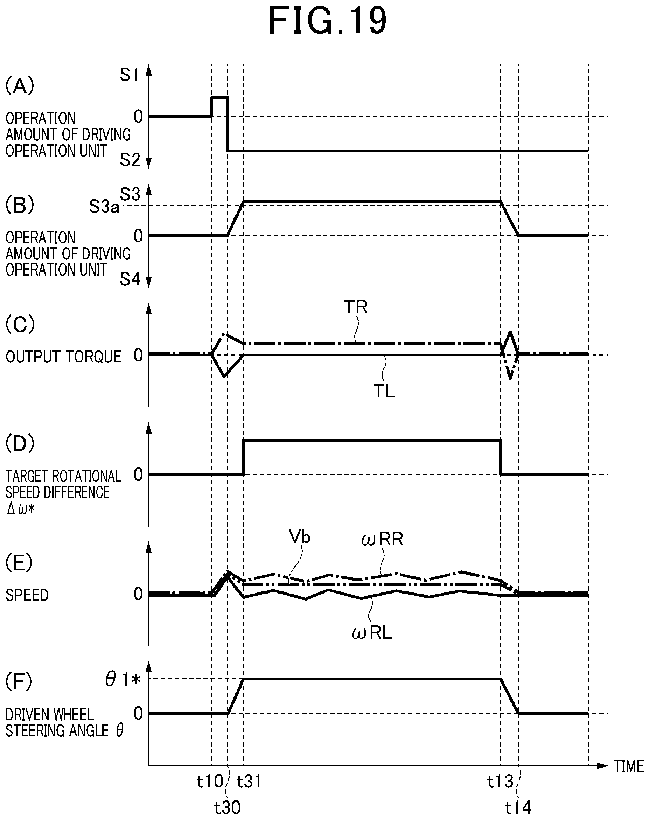

FIGS. 19(A) to (F) are timing charts illustrating the change with time of each parameter when the driver accelerates the vehicle 10 and then turns the vehicle 10 with the vehicle speed Vb being lower than the predetermined speed V2.

For example, it is assumed that: the vehicle 10 is accelerated at a time instant t10; then, at a time instant t30, the joystick 61 of the driving operation unit 60 is operated in a direction between the backward direction J2 and the leftward direction J3, so as to turn the vehicle 10 to the leftward direction D3 while decelerating the vehicle 10. In this case, as shown in FIGS. 19(A) and (B), both the brake operation amount S2 and the leftward operation amount S3 of the driving operation unit 60 increase from the time instant t30. In response to the leftward operation amount S3 of the driving operation unit 60 having increased to exceed the predetermined amount Sa at a time instant t31, the target steering angle $\theta^*$ is set to a predetermined value $\theta$1* using the target steering angle calculation map M16 shown in FIG. 16. With the feedback control performed based on the deviation between the target steering angle $\theta$1* and the driven-wheel steering angle θ of the vehicle 10, the target rotational speed difference Δω* increases as shown in FIG. 19(D). Consequently, the right driving wheel correction torque ΔTcR is set to be higher than the left driving wheel correction torque ΔTcL; thus, as shown in FIG. 19(C), the output torque TR of the motor-generator 31R becomes higher than the output torque TL of the motor-generator 31L. As a result, as shown in FIG. 19(E), the right driving wheel speed ωRR becomes faster than the left driving wheel speed ωRL, thereby causing the vehicle 10 to be turned left.

From the time instant t31, with the leftward operation amount S3 of the driving operation unit 60 kept higher than or equal to the predetermined amount Sa, the target steering angle θ* is also kept at the predetermined value θ1*. Consequently, the steering angle feedback control is performed to keep the driven-wheel steering angle θ of the vehicle 10 at the target steering angle θ1* as shown in FIG. 19(F), thereby keeping a deviation between the output torque TR of the motor-generator 31R and the output torque TL of the motor-generator 31L as shown in FIG. 19(C). As a result, the state of the right driving wheel speed ωRR being faster than the left driving wheel speed ωRL is continued as shown in FIG. 19(E), so that the vehicle 10 is turned to the leftward direction D3 with the driven-wheel steering angle θ of the vehicle 10 kept at the target steering angle θ1* as shown in FIG. 19(F).

With the above-described vehicle 10 according to the present embodiment, it is possible to achieve the following advantageous effects (1) to (6).

(1) The vehicle 10 includes the in-wheel motor 30R that applies braking/driving torque to the right driving wheel 22R, the in-wheel motor 30L that applies braking/driving torque to the left driving wheel 22L, the right driven wheel 21R and the left driven wheel 21L each of which is constituted of a caster wheel, and the EVECU 40 that controls the in-wheel motor 30R and the in-wheel motor 30L. Specifically, the EVECU 40 controls the braking/driving torque applied by the in-wheel motor 30R to the right driving wheel 22R and the braking/driving torque applied by the in-wheel motor 30L to the left driving wheel 22L, thereby controlling turning, advancing/reversing and braking of the vehicle 10. With this configuration, neither an electric power steering (EPS) device and nor a braking device such as a disk brake is required. Consequently, it becomes possible to simplify the structure of the vehicle 10 and improve the robustness of the vehicle 10.

(2) The EVECU 40 sets the basic braking/driving torque Tc based on the first operation amount of the driving operation unit 60 and the vehicle speed Vb. The EVECU 40 also sets the target rotational speed difference Δω* based on the second operation amount of the driving operation unit 60. Then, by correcting the basic braking/driving torque Tc based on the target rotational speed difference Δω*, the EVECU 40 sets both the first target braking/driving torque TR* that is a target value of the braking/driving torque applied by the in-wheel motor 30R to the right driving wheel 22R and the second target braking/driving torque TL* that is a target value of the braking/driving torque applied by the in-wheel motor 30L to the left driving wheel 22L. With this configuration, it becomes possible to easily execute torque control of the in-wheel motors 30R and 30L which enables turning, advancing/reversing and braking of the vehicle 10.

(3) The EVECU 40 sets the basic braking/driving torque Tc so that the vehicle speed Vb becomes lower than or equal to the predetermined upper limit speed Vmax. Consequently, it becomes possible to easily realize the configuration of a slow mobility vehicle.

(4) The EVECU 40 sets the target yaw rate Y* based on both the second operation amount of the driving operation unit 60 and the vehicle speed Vb, and sets the target rotational speed difference Δω* by the feedback control based on the deviation between the set target yaw rate Y* and the actual yaw rate Y. Further, the EVECU 40 sets the target right driving wheel speed ωRR* and the target left driving wheel speed ωRL* based on the target rotational speed difference Δω*. Furthermore, the EVECU 40 sets the right driving wheel correction torque ΔTcR by the feedback control based on the deviation between the target right driving wheel speed ωRR* and the right driving wheel speed ωRR; then, the EVECU 40 sets the first target braking/driving torque TR* by correcting the basic braking/driving torque Tc using the right driving wheel correction torque ΔTcR. Similarly, the EVECU 40 sets the left driving wheel correction torque ΔTcL by the feedback control based on the deviation between the target left driving wheel speed ωRL* and the left driving wheel speed ωR; then, the EVECU 40 sets the second target braking/driving torque TL* by correcting the basic braking/driving torque Tc using the left driving wheel correction torque ΔTcL. By setting the target rotational speed difference Δω* using the yaw rate feedback control as above, it becomes possible to turn the vehicle 10 while controlling the actual yaw rate Y of the vehicle 10 to the target yaw rate Y*. Consequently, it becomes possible to improve the during-turning stability of the vehicle 10.

In general, when a vehicle turns while traveling at a low speed, the steering angle of a tire is equal to the turning angle of the vehicle around the center of gravity thereof. However, when the vehicle turns while traveling at a high speed, the steering angle of the tire is not equal to the turning angle of the vehicle around the center of gravity thereof. Specifically, the turning angle of the vehicle around the center of gravity thereof is smaller than the steering angle of the tire. In other words, a slip angle occurs in the tire. As a result, it becomes necessary to perform control to correct the vehicle attitude taking into account the tire slip angle.

In this regard, the vehicle 10 according to the present embodiment is a slow mobility vehicle whose vehicle speed Vb is limited so as to be lower than or equal to the upper limit speed Vmax. Therefore, when the vehicle 10 turns, the driven-wheel steering angle $\theta$ is basically equal to the turning angle of the vehicle 10 around the center of gravity Gc thereof. Consequently, it becomes unnecessary to perform control to correct the attitude of the vehicle 10 taking into account a tire slip angle. That is, it becomes possible to ensure the stability of turning of vehicle 10 by the yaw rate feedback control of bringing the actual yaw rate Y of the vehicle 10 into agreement with the target yaw rate Y*. In other words, the yaw rate feedback control according to the present embodiment can be said to be the most suitable control for slow mobility vehicles limited to low-speed traveling.

(5) The EVECU 40 sets the target steering angle $\theta$* based on both the second operation amount of the driving operation unit 60 and the vehicle speed Vb, and sets the target rotational speed difference $\Delta\omega$* by the feedback control based on the deviation between the set target steering angle $\theta$* and the actual driven-wheel steering angle $\theta$. By setting the target rotational speed difference $\Delta\omega$* using the steering angle feedback control as above, it becomes possible to turn the vehicle 10 while controlling the driven-wheel steering angle $\theta$ of the vehicle 10 to the target steering angle $\theta$*. Consequently, it becomes possible to realize special turning of the vehicle 10, for example turning the vehicle 10 on the spot.

(6) When the vehicle speed Vb is higher than or equal to the predetermined speed V2, the EVECU 40 sets the target rotational speed difference $\Delta\omega$* using the above-described yaw rate feedback control. In contrast, when the vehicle speed Vb is lower than the predetermined speed V2, the EVECU 40 sets the target rotational speed difference $\Delta\omega$* using the above-described steering angle feedback control. With this configuration, it becomes possible to realize more proper turning of the vehicle 10 according to the vehicle speed Vb.

The above-described embodiment can also be implemented as follows. The speed calculation unit 41 may set the target yaw rate Y* based on only the leftward operation amount S3 and the rightward operation amount S4 of the driving operation unit 60 without using the vehicle speed Vb.

In the above-described embodiment, as shown in FIG. 6, the EVECU 40 is configured to realize turning, advancing/reversing and braking of the vehicle 10 by the torque control of the in-wheel motors 30R and 30L. Alternatively, the EVECU 40 may be configured to realize turning, advancing/reversing and braking of the vehicle 10 by controlling the rotational speeds of the in-wheel motors 30R and 30L. In addition, the rotational speed control of the in-wheel motors 30R and 30L may be realized by a control procedure similar to that shown in FIG. 6.

The vehicle 10 may include, instead of the in-wheel motors 30R and 30L, other devices that can apply braking/driving torque to the driving wheels 22R and 22L.

The EVECU 40 and the control method thereof according to the present disclosure may be realized by one or more dedicated computers that include a processor, which is programmed to perform one or more functions embodied by a computer program, and a memory. As an alternative, the EVECU 40 and the control method thereof according to the present disclosure may be realized by one or more dedicated computers that include a processor configured with one or more dedicated hardware logic circuits. As another alternative, the EVECU 40 and the control method thereof according to the present disclosure may be realized by one or more dedicated computers that are constituted of a combination of a processor programmed to perform one or more functions, a memory and a processor configured with one or more hardware logic circuits. Moreover, the computer program may be stored as computer-executable instructions in a computer-readable non-transitory tangible recording medium. The dedicated hardware logic circuits and the hardware logic circuits may be implemented by digital circuits that include a plurality of logic circuits, or by analog circuits.

The configuration of the vehicle 10 according to the above-described embodiment is not limited to the vehicle 10, but can also be applied to any mobile obj ect.

The present disclosure is not limited to the above-described specific examples. Any design modifications suitably made by those skilled in the art to the above-described specific examples are also included in the scope of the present disclosure as long as they have the features of the present disclosure. The components included in the above-described specific examples, as well as their arrangements, conditions, shapes and the like are not limited to those illustrated, but may be modified as appropriate. Moreover, the components included in the above-described specific examples may be suitably combined as long as no technical contradiction occurs between them.

## Claims

1. A mobile object comprising:

a first braking/driving torque application unit (30R) that applies first braking/driving torque to a right driving wheel (22R);
a second braking/driving torque application unit (30L) that applies second braking/driving torque to a left driving wheel (22L);
a right driven wheel (21R) and a left driven wheel (21L) each of which is constituted of a caster wheel; and
a control unit (40) that controls the first braking/driving torque application unit and the second braking/driving torque application unit, wherein
the control unit is configured to perform turning, advancing/reversing and braking of the mobile object by controlling the first braking/driving torque and the second braking/driving torque or by controlling rotational speed of the right driving wheel and rotational speed of the left driving wheel.

2. The mobile object as set forth in Claim 1, wherein the control unit is further configured to:

   set basic braking/driving torque, which is a target value of the first braking/driving torque and the second braking/driving torque, based on a first operation amount and a traveling speed of the mobile object, the first operation amount being an amount of operation performed on the mobile object to accelerate or decelerate the mobile object;
   set a target rotational speed difference, which is a target value of a difference between the rotational speed of the right driving wheel and the rotational speed of the left driving wheel, based on a second operation amount that is an amount of operation performed on the mobile object to turn the mobile object; and
   set first target braking/driving torque and second target braking/driving torque by correcting the basic braking/driving torque based on the target rotational speed difference, the first target braking/driving torque being a target value of the first braking/driving torque, the second target braking/driving torque being a target value of the second braking/driving torque.

3. The mobile object as set forth in Claim 2, wherein the control unit is further configured to set the basic braking/driving torque so that the traveling speed of the mobile object becomes lower than or equal to a predetermined upper limit speed.

4. The mobile object as set forth in Claim 2 or 3, wherein the control unit is further configured to:

   set a target yaw rate, which is a target value of a yaw rate of the mobile object, based on only the second operation amount or based on both the second operation amount and the traveling speed of the mobile object;
   set the target rotational speed difference, which is a target value of the difference between the rotational speed of the right driving wheel and the rotational speed of the left driving wheel, based on a deviation between an actual yaw rate of the mobile object and the target yaw rate;
set a first target rotational speed and a second target rotational speed based on the target rotational speed difference, the first target rotational speed being a target value of the rotational speed of the right driving wheel, the second target rotational speed being a target value of the rotational speed of the left driving wheel;
set first correction torque by feedback control based on a deviation between an actual rotational speed of the right driving wheel and the first target rotational speed;
set the first target braking/driving torque by correcting the basic braking/driving torque using the first correction torque;
set second correction torque by feedback control based on a deviation between an actual rotational speed of the left driving wheel and the second target rotational speed; and
set the second target braking/driving torque by correcting the basic braking/driving torque using the second correction torque.

5. The mobile object as set forth in Claim 4, wherein the control unit is further configured to set, based on a fact that the traveling speed of the mobile object is higher than or equal to a predetermined speed, the target rotational speed difference based on the deviation between the actual yaw rate of the mobile object and the target yaw rate.

6. The mobile object as set forth in Claim 2 or 3, wherein the control unit is further configured to:

   set a target steering angle, which is a target value of a turning angle of the right driven wheel and the left driven wheel, based on only the second operation amount or based on both the second operation amount and the traveling speed of the mobile object;
   set the target rotational speed difference, which is a target value of the difference between the rotational speed of the right driving wheel and the rotational speed of the left driving wheel, based on a deviation between an actual turning angle of the right driven wheel and the left driven wheel and the target steering angle;
   set a first target rotational speed and a second target rotational speed based on the target rotational speed difference, the first target rotational speed being a target value of the rotational speed of the right driving wheel, the second target rotational speed being a target value of the rotational speed of the left driving wheel;

set first correction torque by feedback control based on a deviation between an actual rotational speed of the right driving wheel and the first target rotational speed;

set the first target braking/driving torque by correcting the basic braking/driving torque using the first correction torque;

set second correction torque by feedback control based on a deviation between an actual rotational speed of the left driving wheel and the second target rotational speed; and

set the second target braking/driving torque by correcting the basic braking/driving torque using the second correction torque.

7. The mobile object as set forth in Claim 6, wherein the control unit is further configured to set, based on a fact that the traveling speed of the mobile object is lower than a predetermined speed, the target rotational speed difference based on the deviation between the actual turning angle of the right driven wheel and the left driven wheel and the target steering angle.

8. A program for controlling a first braking/driving torque application unit and a second braking/driving torque application unit in a mobile object, the mobile object comprising:

the first braking/driving torque application unit (30R) that applies first braking/driving torque to a right driving wheel (22R);

the second braking/driving torque application unit (30L) that applies second braking/driving torque to a left driving wheel (22L); and

a right driven wheel (21R) and a left driven wheel (21L) each of which is constituted of a caster wheel,

the program being configured to cause a computer to execute processes of performing turning, advancing/reversing and braking of the mobile object by controlling the first braking/driving torque and the second braking/driving torque or by controlling rotational speed of the right driving wheel and rotational speed of the left driving wheel.

# FIG.1

# FIG.2

m10R(m10L)

11  210R(210L)

C

D1

21R(21L)

m11R(m11L)

FIG.3

EP 4 400 356 A1

# FIG.4

50

P ~51

R ~52

D ~53

# FIG.5

# FIG.6

# FIG.7

START

S10
Vb = 0 ?  → NO

YES

S11
SWITCHED TO R RANGE ?  → NO

YES

S12
Fs = R

S13
SWITCHED TO D RANGE ?  → NO

YES

S14
Fs = D

S15
Fs = D ?  → NO

YES

S16
Ta = Tm

S17
Ta = −Tm

RETURN

# FIG.8

# FIG.9

M11

Tm

SMALL  0

S2

LARGE

Vb

# FIG.10

```
          ┌─────────────┐
          │    START    │
          └──────┬──────┘
                 │
                 ▼
   ┌──────────────────────────┐
   │        SET Vmax          │── S20
   └────────────┬─────────────┘
                │
                ▼
   ┌──────────────────────────┐
   │         SET Tb           │── S21
   └────────────┬─────────────┘
                │
                ▼
          ┌─────────────┐
          │   RETURN    │
          └─────────────┘
```

# FIG.11

# FIG.12

```
                    ┌─────────────┐
                    │    START    │
                    └─────────────┘
                           │
                           ▼          S30
                        ╱────────╲        NO
                      ╱  Vb ≥ V2  ╲──────────────────┐
                      ╲            ╱                  │
                        ╲────────╱                    ▼          S34
                           │ YES                  ╱─────────╲
                           │                    ╱  S3 ≥ Sa ?  ╲    NO
                           │          ◄────────╲     or        ╱────┐
                           │              NO     ╲  S4 ≥ Sa ?  ╱    │
                           │                       ╲─────────╱      │
                           │                           │ YES        │
                           │                           │            │
                  ┌────────────────┐  S31     ┌────────────────┐ S35│
                  │   SET Δωb       │          │   SET Δωb      │    │
                  └────────────────┘          └────────────────┘    │
                           │                           │            │
                  ┌────────────────┐  S32     ┌────────────────┐ S36│
                  │   SET Y*        │          │   SET θ*       │    │
                  └────────────────┘          └────────────────┘    │
                           │                           │            │
                  ┌────────────────┐  S33     ┌────────────────┐ S37│
                  │ CALCULATE Δωc   │          │ CALCULATE Δωc  │    │
                  └────────────────┘          └────────────────┘    │
                           │                           │            │
                           │◄──────────────────────────┘◄───────────┘
                           ▼
                  ┌────────────────┐  S38
                  │ CALCULATE Δω*   │
                  └────────────────┘
                           │
                           ▼          S39
                        ╱────────╲        NO
                      ╱  Fs = D ?  ╲──────────────────┐
                      ╲            ╱                   │
                        ╲────────╱                     ▼          S40
                           │ YES             ┌────────────────┐
                           │                 │   Δω* = −Δω*    │
                           │                 └────────────────┘
                           │◄────────────────────────┘
                           ▼
                    ┌─────────────┐
                    │   RETURN    │
                    └─────────────┘
```

# FIG.13

# FIG.14

M14

Y*

LOW

Vb

HIGH

S3 ← → S4

0

# FIG.15

# FIG.16

M16

θ*

LOW

Vb

HIGH

S3

S4

0

# FIG.17

# FIG.18

(A) OPERATION AMOUNT OF DRIVING OPERATION UNIT

(B) OPERATION AMOUNT OF DRIVING OPERATION UNIT

(C) OUTPUT TORQUE

TR

TL

(D) TARGET ROTATIONAL SPEED DIFFERENCE $\Delta\omega*$

(E) SPEED

Vb    $\omega$RR

$\omega$RL

(F) YAW RATE Y

T1*

TIME

t10    t20    t13

t21    t14

# FIG.19

(A) OPERATION AMOUNT OF DRIVING OPERATION UNIT

(B) OPERATION AMOUNT OF DRIVING OPERATION UNIT

(C) OUTPUT TORQUE

(D) TARGET ROTATIONAL SPEED DIFFERENCE $\Delta\omega*$

(E) SPEED

(F) DRIVEN WHEEL STEERING ANGLE $\theta$

## INTERNATIONAL SEARCH REPORT

| International application No. |
| --- |
| **PCT/JP2022/031736** |

**A.  CLASSIFICATION OF SUBJECT MATTER**

*B60L 15/20*(2006.01)i; *B60W 30/188*(2012.01)i; *B62D 11/04*(2006.01)i
FI:   B60L15/20 S; B60W30/188; B62D11/04 Z

According to International Patent Classification (IPC) or to both national classification and IPC

**B.  FIELDS SEARCHED**

Minimum documentation searched (classification system followed by classification symbols)

B60L15/20; B60W30/188; B62D11/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2011-115006 A (KANZAKI KOKYUKOKI MFG. CO., LTD.) 09 June 2011 (2011-06-09) paragraphs [0031]-[0079], fig. 1-12 | 1, 8 |
| Y | | 2-4, 6 |
| A | | 5, 7 |
| Y | JP 9-117016 A (KABUSHIKI KAISHA MEIDENSHA) 02 May 1997 (1997-05-02) paragraphs [0010]-[0012], fig. 4 | 2-4, 6 |
| Y | Microfilm of the specification and drawings annexed to the request of Japanese Utility Model Application No. 32938/1983 (Laid-open No. 141405/1984) (NISSAN MOTOR CO., LTD.) 21 September 1984 (1984-09-21), specification, p. 3, line 2 to p. 10, line 6, fig. 2 | 3-4, 6 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 October 2022** | **25 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/031736**

| Patent document cited in search report | | | Publication date (day/month/year) | Patent family member(s) | | Publication date (day/month/year) |
|---|---|---|---|---|---|---|
| JP | 2011-115006 | A | 09 June 2011 | US 2011/0127093 A1 paragraphs [0057]-[0105], fig. 1-12 EP 2327607 A2 | | |
| JP | 9-117016 | A | 02 May 1997 | (Family: none) | | |
| JP | 59-141405 | U1 | 21 September 1984 | (Family: none) | | |

Form PCT/ISA/210 (patent family annex) (January 2015)

**EP 4 400 356 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021147626 A
- JP 2006341656 A